# EUROPÄISCHE PATENTSCHRIFT

(11) **EP 2 160 523 B1**
(45) Veröffentlichungstag und Bekanntmachung des Hinweises auf die Patenterteilung: **23.05.2012**
(21) Anmeldenummer: 08760047.4
(22) Anmeldetag: 27.05.2008
(51) Int. Cl.: F16D 48/08

(54) **VERFAHREN ZUR BETÄTIGUNG EINER KUPPLUNG EINES ANTRIEBSSTRANGS**
METHOD FOR ACTUATING A CLUTCH OF A DRIVETRAIN
PROCEDE D'ACTIONNEMENT D'UN EMBRAYAGE D'UNE CHAINE DE TRANSMISSION

(30) Priorität: 30.06.2007 DE 102007030490
(43) Veröffentlichungstag der Anmeldung: 10.03.2010
(73) Patentinhaber: ZF Friedrichshafen AG, 88038 Friedrichshafen (DE)
(72) Erfinder: PETZOLD, Rainer, 88045 Friedrichshafen (DE); HERTER, Peter, 88212 Ravensburg (DE); BITZER, Franz, 88048 Friedrichshafen (DE); STAUDINGER, Joachim, 88214 Ravensburg (DE)
(86) Internationale Anmeldenummer: PCT/EP2008/056449
(87) Internationale Veröffentlichungsnummer: WO 2009/003768

(56) Entgegenhaltungen:
- EP-A- 1 584 832
- EP-A1- 0 183 094
- WO-A-2007/014636
- DE-A1-102004 007 160
- US-A1- 2003 134 713
- US-A1- 2005 221 958

## Beschreibung

Die Erfindung betrifft ein Verfahren zur Betätigung einer Kupplung eines Antriebsstrangs eines Kraftfahrzeugs nach dem Oberbegriff des Anspruchs 1 bzw. 4.

Ein Antriebsstrang eines Kraftfahrzeugs umfasst neben einem Antriebsaggregat und einem Getriebe eine zwischen das Antriebsaggregat und das Getriebe geschaltete Kupplung, wobei bei geöffneter Kupplung das Antriebsaggregat vom Getriebe abgekoppelt und bei geschlossener Kupplung das Antriebsaggregat an das Getriebe gekuppelt ist. Die hier vorliegende Erfindung betrifft ein Verfahren zur automatischen Betätigung einer Kupplung eines Antriebsstrangs, wobei das Getriebe des Antriebsstrangs als Automatgetriebe und die Kupplung als automatisch betätigte Kupplung ausgebildet ist.

Beim Abrollen eines Kraftfahrzeugs in einem Abhang bei unbetätigtem Gaspedal soll die Kupplung möglichst geschlossen sein, damit das Antriebsaggregat mit seiner Bremswirkung auf das Kraftfahrzeug wirken kann. Weiterhin kann beim Abrollen bei geschlossener Kupplung eine sogenannte Schubabschaltung des Antriebsaggregats aktiviert werden, wodurch Kraftstoff eingespart werden kann. Beim Ausrollen des Kraftfahrzeugs in einer Ebene bei unbetätigtem Gaspedal soll hingegen die Kupplung möglichst geöffnet sein, damit das Kraftfahrzeug ausrollen kann. Ein Verfahren zur Betätigung einer Kupplung eines Antriebsstrangs bei unbetätigtem Gaspedal muss demnach die Situationen abdecken, dass beim Abrollen des Kraftfahrzeugs in einem Abhang die Kupplung das Zugmoment des Antriebsaggregats aufnehmen muss und daher die Kupplung nicht trennen darf, und dass beim Ausrollen des Kraftfahrzeugs die Kupplung soweit trennen muss, dass ein Ausrollen ohne sogenanntes Nachziehen möglich ist.

Nach der Praxis wird die Kupplungsposition der Kupplung des Antriebsstrangs abhängig von einer Drehzahldifferenz zwischen einer Getriebeeingangsdrehzahl und einer Antriebsaggregatleerlaufdrehzahl bestimmt. Insbesondere dann, wenn diese Drehzahldifferenz sehr klein ist, also die Getriebeausgangsdrehzahl in etwa der Antriebsaggregatleerlaufdrehzahl entspricht, bereitet die Ermittlung einer geeigneten Kupplungsposition auf Grundlage der Drehzahldifferenz Schwierigkeiten. Dies kann dazu führen, dass die Kupplung mehrfach hintereinander geschlossen und geöffnet wird, was zu deutlichen Komforteinbußen führt.

Ein Verfahren nach dem Oberbegriff der Ansprüche 1 und 4 ist aus US2005/0221958 bekannt.

Hiervon ausgehend liegt der vorliegenden Erfindung das Problem zu Grunde, ein neuartiges Verfahren zur Betätigung einer Kupplung eines Antriebsstrangs zu schaffen.

Nach einem ersten Aspekt der Erfindung wird dieses Problem durch ein Verfahren gemäß Anspruch 1 gelöst. Hiernach wird die aus der Drehzahldifferenz zwischen der Getriebeeingangsdrehzahl und der Antriebsaggregatleerlaufdrehzahl ermittelte Kupplungsposition mit mindestens einer Größe korrigiert, die von einer Kraftfahrzeugbeschleunigung abhängig ist.

Nach einem zweiten Aspekt der Erfindung wird dieses Problem durch ein Verfahren gemäß Anspruch 4 gelöst. Hiernach wird die Kupplungsposition abhängig von der Drehzahldifferenz zwischen der Getriebeeingangsdrehzahl und der Antriebsaggregatleerlaufdrehzahl und abhängig von einem Antriebsstrangmoment oder einer dem Antriebsaggregat zugeführten Kraftstoffmenge ermittelt.

Mit den obigen Aspekten der hier vorliegenden Erfindung, die entweder alleine oder in beliebiger Kombination miteinander Anwendung finden können, kann eine Kupplungspositionierung für die Fälle des Abrollens eines Kraftfahrzeugs in einem Abhang bei unbetätigtem Gaspedal sowie des Ausrollens des Kraftfahrzeugs in einer Ebene bei unbetätigtem Gaspedal wesentlich besser bestimmt werden, als dies mit der aus der Praxis bekannten Vorgehensweise möglich ist. Insbesondere kann ein zu Komforteinbußen führendes hintereinander folgendes Öffnen und Schließen der Kupplung vermieden werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

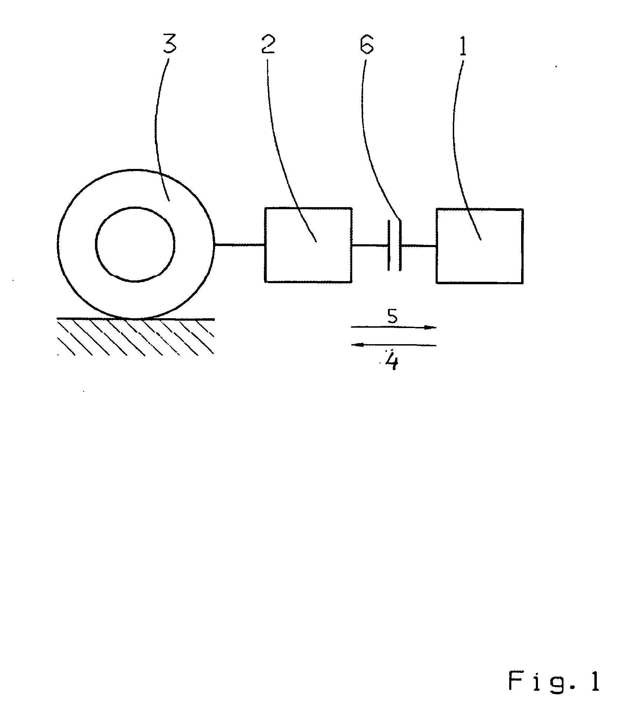

- Fig. 1: eine schematisierte Darstellung eines Antriebsaggregats eines Kraftfahrzeugs.

Fig. 1 zeigt stark schematisiert ein Antriebsstrangschema eines Kraftfahrzeugs, wobei der Antriebsstrang von einem Antriebsaggregat 1, einem Automatgetriebe 2 und angetriebenen Rädern 3 des Kraftfahrzeugs gebildet wird. Das Automatgetriebe 2 setzt ein Zugkraftangebot des Antriebsaggregats 1 auf die Räder 3 des Kraftfahrzeugs um. Dann, wenn der Antriebsstrang gemäß Fig. 1 im Zugbetrieb betrieben wird, ist ein Leistungsfluss in Richtung des Pfeils 4 vom Antriebsaggregat 1 in Richtung auf die Räder 3 des Kraftfahrzeugs gerichtet. Wird hingegen der Antriebsstrang z. B. beim Bremsen oder Ausrollen im Schubbetrieb betrieben, so ist der Leistungsfluss in Richtung des Pfeils 5 von den Rädern 3 zum Antriebsaggregat 1 gerichtet. Zwischen das Automatgetriebe 2 und das Antriebsaggregat 1 ist eine automatisch betätigte Kupplung 6 geschaltet.

Die hier vorliegende Erfindung betrifft ein Verfahren zur Betätigung der automatisch getätigten Kupplung 6 des Antriebsstrangs, nämlich zur Ermittlung einer Kupplungsposition für die Kupplung 6, mit der einerseits beim Abrollen des Kraftfahrzeugs in einem Abhang bei unbetätigtem Gaspedal und andererseits beim Ausrollen des Kraftfahrzeugs in einer Ebene bei unbetätigtem Gaspedal ein hoher Schaltungskomfort gewährleistet werden kann.

Die Kupplungsposition der Kupplung 6 zur Abdeckung der Fahrsituation des Abrollens sowie des Ausrollens bei jeweils unbetätigtem Gaspedal erfolgt abhängig von einer Drehzahldifferenz zwischen einer Eingangsdrehzahl des Automatgetriebes 2 und einer Leerlaufdrehzahl des Antriebsaggregats 1. Die Eingangsdrehzahl des Automatgetriebes 2 wird nachfolgend als Getriebeeingangsdrehzahl und die Leerlaufdrehzahl des Antriebsaggregats 1 nachfolgend als Antriebsaggregatleerlaufdrehzahl bezeichnet.

Nach einem ersten Aspekt der hier vorliegenden Erfindung wird die Kupplungsposition abhängig von einer Drehzahldifferenz, die aus einer gemessenen Getriebeeingangsdrehzahl und einer gemessenen Antriebsaggregatleerlaufdrehzahl ermittelt wird, bestimmt, wobei die abhängig von dieser Drehzahldifferenz bestimmte Kupplungsposition mit mindestens einer Größe, die von einer Kraftfahrzeugbeschleunigung abhängig ist, korrigiert wird.

Die aus der Drehzahldifferenz zwischen der gemessenen Getriebeeingangsdrehzahl und der gemessenen Antriebsaggregatleerlaufdrehzahl ermittelte Kupplungsposition wird derart korrigiert, dass dann, wenn auf Grundlage der von der Getriebeeingangsdrehzahl abhängigen Drehzahldifferenz ein weiteres Öffnen der Kupplung 6 gefordert wird, bei positiver Beschleunigung des Kraftfahrzeugs das weitere Öffnen der Kupplung 6 unterdrückt oder die Kupplungsposition in Richtung auf ein weiteres Schließen korrigiert wird.

Dann hingegen, wenn auf Grundlage der von der Getriebeeingangsdrehzahl abhängigen Drehzahldifferenz ein weiteres Schließen der Kupplung 6 gefordert wird, wird bei negativer Beschleunigung des Kraftfahrzeugs das weitere Schließen der Kupplung 6 unterdrückt oder die Kupplungsposition in Richtung auf ein weiteres Öffnen korrigiert.

Diese Korrektur der Kupplungsposition mit Hilfe der oder jeder Größe kann derart erfolgen, dass die Kupplungsposition mit einem von der Kraftfahrzeugbeschleunigung abhängigen Faktor multiplikativ korrigiert und/oder mit einem von der Kraftfahrzeugbeschleunigung abhängigen Offset additiv korrigiert wird.

Die Erfindung trägt der Erkenntnis Rechnung, dass es sich bei der gemessenen Getriebeeingangsdrehzahl um eine schwingende Größe handelt. Mit Hilfe der Erfindung kann trotz des Umstands, dass die Getriebeeingangsdrehzahl schwingt, die Kupplungsposition beruhigt und so der Schaltungskomfort gesteigert werden.

Zusätzlich oder alternativ zum ersten Aspekt der hier vorliegenden Erfindung kann nach einem zweiten Aspekt der hier vorliegenden Erfindung die Kupplungsposition einerseits abhängig von der Drehzahldifferenz zwischen Getriebeeingangsdrehzahl und der Antriebsaggregatleerlaufdrehzahl und andererseits abhängig von einem Antriebsstrangmoment oder einer dem Antriebsaggregat 1 zugeführten Kraftstoffmenge ermittelt werden. Die dem Antriebsaggregat 1 zugeführte Kraftstoffmenge, die auch als Einspritzmenge bezeichnet wird, ist dabei proportional zum Antriebsstrangmoment.

Nach dem zweiten Aspekt wird vorzugsweise so vorgegangen, dass dann, wenn die dem Antriebsaggregat zugeführte Kraftstoffmenge kleiner als ein Grenzwert ist, oder ein Momentfluss vom Kraftfahrzeug auf das Antriebsaggregat 1, also ein Schubmoment, vorliegt, das weitere Öffnen der Kupplung 6 unterdrückt oder die Kupplungsposition in Richtung auf ein weiteres Schließen der Kupplung 6 korrigiert wird. Dann hingegen, wenn die dem Antriebsaggregat 1 zugeführte Kraftstoffmenge größer als ein Grenzwert ist oder ein Momentfluss vom Antriebsaggregat 1 auf das Kraftfahrzeug, also ein Zugmoment, vorliegt, wird das weitere Schließen der Kupplung 6 unterdrückt oder die Kupplungsposition in Richtung auf ein weiteres Öffnen korrigiert. Das Antriebsstrangmoment kann dabei entweder am Antriebsaggregat 1 oder am Getriebeeingang oder Getriebeausgang erfasst werden.

### Bezugszeichen

- 1: Antriebsaggregat
- 2: Automatgetriebe
- 3: Rad
- 4: Pfeil
- 5: Pfeil
- 6: Kupplung

## Patentansprüche

1. Betätigungsverfahren einer Kupplung (6) eines Antriebsstrangs eines Kraftfahrzeugs, wobei für ein Abrollen des Kraftfahrzeugs in einem Abhang bei unbetätigtem Gaspedal und für ein Ausrollen des Kraftfahrzeugs In einer Ebene bei unbetätigtem Gaspedal eine Kupplungsposition der Kupplung (6) abhängig von einer Drehzahldifferenz zwischen einer Eingangsdrehzahl eines Getriebes (2) des Antriebsstrangs und einer Leerlaufdrehzahl eines Antnebsaggregats (1) des Antriebsstrangs bestimmt wird, wobei die aus der Drehzahldifferenz zwischen der Getriebeeingangsdrehzahl und der Antriebsaggregatleerfaufdrehzahl ermittelte Kupplungsposition mit mindestens einer Größe komigiert wird, die von einer Kraftfahrzeugbeschleunigung abhängig ist **dadurch gekennzeichnet dass** die korrektur in der Art durchgefürt wird dass dann wenn auf Grundlage der von der Getriebeeingangsdrehzahl abhängige Drehzahldifferenz ein weiteres Öffnen der Kupplung (6) gefordert wird, bei positiver Beschleunigung des Kraftfahrzeugs das weitere Öffnen der Kupplung (6) unterdrückt oder die Kupplungsposition In Richtung eines weiteren Schließens korrigiert wird bzw. wenn auf Grundlage der von der Getriebeeingangsdrehzahl abhängigen Drehzahldifferenz ein weiteres Schließen der Kupplung (6) gefordert wird, bei negativer Beschleunigung des Kraftfahrzeugs das weitere Schließen der Kupplung (6) unterdrück oder die Kupplungsposition in Richtung eines weiteren Öffnens korrigiert wird.

2. Verfahren nach anspruch 2 **dadurch gekennzeichnet, dass** die Kupplungsposition mit einem von der Kraftfahrzeugbeschleunigung abhängigen Faktor multiplikativ korrigiert wird.

3. Verfahren nach Anspruch 1 oder 2, **dadurch gekennzeichnet, dass** die Kupplungsposition mit einem von der Kraft-fahrzeugbeschleunigung abhängigen Offset additiv korrigiert wird.

4. Betätigungsverfahren einer Kupplung (6) eines Antriebsstrangs eines Kraftfahrzeugs, wobei für ein Abrollen des Kraftfahrzeugs in einem Abhang bei unbetätigtem Gaspedal und für ein Ausrollen des Kraftfahrzeugs in einer Ebene bei unbetätigtem Gaspedal eine Kupplungsposition der Kupplung (6) abhängig von einer Drehzahldifferenz zwischen einer Eingangsdrehzahl eines Getriebes (2) des Antriebsstrangs und einer Leerlaufdrehzahl eines Antriebsaggregats (1) des Antriebsstrangs bestimmt wird, wobei die Kupplungsposition abhängig von der Drehzahldifferenz zwischen der Getriebeeingangsdrehzahl und der Antriebsaggregatieerlaufdrehzahl und abhängig von einem Antriebsstrangmoment oder einer dem Antriebsaggregat (1) zugeführten Kraftstoffmenge ermittelt wird **dadurch gekennzeichnet dass** die dem Antriebsaggregat (1) zugeführten Kraftstoffmenge kleiner als ein Grenzwert ist oder ein Momentfluss vom Kraftfahrzeug auf das Antriebsaggregat (1) vorliegt, das weitere Öffnen der Kupplung (6) unterdrückt oder die Kupplungsposition in Richtung eines weiteren Schließens korrigiert wird bzw. wenn die dem Antriebsaggregat (1) zugeführten Kraftstoffmenge größer als ein Grenzwert ist oder ein Momentfluss vom Antriebsaggregat auf das Kraftfahrzeug vorliegt, das weitere Schließen der Kupplung (6) unterdrückt oder die Kupplungsposition in Richtung eines weiteren Öffnens korrigiert wird.

## Claims

1. Actuating method of a clutch (6) of a drive train of a motor vehicle, a clutch position of the clutch (6) being determined for rolling of the motor vehicle on a slope, when the accelerator pedal is not actuated, and for coasting of the motor vehicle on level land, when the accelerator pedal is not actuated, as a function of a rotational-speed difference between an input rotational speed of a transmission (2) of the drive train and an idling rotational speed of a drive assembly (1) of the drive train, the clutch position which is determined from the rotational-speed difference between the transmission input rotational speed and the drive-assembly idling rotational speed being corrected with at least one variable which is a function of a motor-vehicle acceleration, **characterized in that** the correction is carried out in such a way that, when further opening of the clutch (6) is required on the basis of the rotational-speed difference which is a function of the transmission input rotational speed, the further opening of the clutch (6) is suppressed or the clutch position is corrected in the direction of further closure in the case of positive acceleration of the motor vehicle or, when further closure of the clutch (6) is required on the basis of the rotational-speed difference which is a function of the transmission input rotational speed, the further closure of the clutch (6) is suppressed or the clutch position is corrected in the direction of further opening in the case of negative acceleration of the motor vehicle.

2. Method according to Claim 1, **characterized in that** the clutch position is corrected by multiplying by a factor which is a function of the motor-vehicle acceleration.

3. Method according to either of Claims 1 and 2, **characterized in that** the clutch position is corrected by adding an offset which is a function of the motor-vehicle acceleration.

4. Actuating method of a clutch (6) of a drive train of a motor vehicle, a clutch position of the clutch (6) being determined for rolling of the motor vehicle on a slope, when the accelerator pedal is not actuated, and for coasting of the motor vehicle on level land, when the accelerator pedal is not actuated, as a function of a rotational-speed difference between an input rotational speed of a transmission (2) of the drive train and an idling rotational speed of a drive assembly (1) of the drive train, the clutch position being determined as a function of the rotational-speed difference between the transmission input rotational speed and the drive-assembly idling rotational speed and as a function of a drive-train moment or a fuel quantity which is fed to the drive assembly (1), **characterized in that**, when the fuel quantity which is fed to the drive assembly (1) is smaller than a limiting value or there is a flow of moment from the motor vehicle to the drive assembly (1), the further opening of the clutch (6) is suppressed or the clutch position is corrected in the direction of further closure or, when the fuel quantity which is fed to the drive assembly (1) is greater than a limiting value or there is a flow of moment from the drive assembly to the motor vehicle, the further closure of the clutch (6) is suppressed or the clutch position is corrected in the direction of further opening.

## Revendications

1. Procédé d'actionnement d'un embrayage (6) d'une chaîne cinématique d'un véhicule automobile, dans lequel, pour un roulage du véhicule automobile en descente sans actionner la pédale d'accélérateur, et pour un roulage vers l'arrêt du véhicule automobile sur une surface plane sans actionner la pédale d'accélérateur, une position d'embrayage de l'embrayage (6) est déterminée en fonction d'une différence de régime entre un régime d'entrée d'une transmission (2) de la chaîne cinématique et un régime de marche à vide d'un groupe motopropulseur (1) de la chaîne cinématique, la position de l'embrayage déterminée à partir de la différence de régime entre le régime d'entrée de la transmission et le régime de marche à vide du groupe motopropulseur étant corrigée avec au moins une grandeur qui dépend d'une accélération du véhicule automobile, **caractérisé en ce que** la correction est effectuée de telle sorte que, lorsque, sur la base de la différence de régime dépendant du régime d'entrée de la transmission, une ouverture croissante de l'embrayage (6) est exigée, en cas d'accélération positive du véhicule automobile, l'ouverture croissante de l'embrayage (6) soit supprimée, ou la position de l'embrayage soit corrigée dans le sens d'une fermeture croissante, ou lorsque, sur la base de la différence de régime dépendant du régime d'entrée de la transmission, une fermeture croissante de l'embrayage (6) est exigée, en cas d'accélération négative du véhicule automobile, la fermeture croissante de l'embrayage (6) soit supprimée ou la position de l'embrayage soit corrigée dans le sens d'une ouverture croissante.

2. Procédé selon la revendication 1, **caractérisé en ce que** la position de l'embrayage est corrigée par multiplication avec un facteur dépendant de l'accélération du véhicule automobile.

3. Procédé selon l'une quelconque des revendications 1 à 2, **caractérisé en ce que** la position de l'embrayage est corrigée par addition avec un décalage dépendant de l'accélération du véhicule automobile.

4. Procédé d'actionnement d'un embrayage (6) d'une chaîne cinématique d'un véhicule automobile, dans lequel, pour un roulage du véhicule automobile en descente sans actionner la pédale d'accélérateur, et pour un roulage vers l'arrêt du véhicule automobile sur une surface plane sans actionner la pédale d'accélérateur, une position d'embrayage de l'embrayage (6) est déterminée en fonction d'une différence de régime entre un régime d'entrée d'une transmission (2) de la chaîne cinématique et un régime de marche à vide d'un groupe motopropulseur (1) de la chaîne cinématique, la position de l'embrayage étant déterminée en fonction de la différence de régime entre le régime d'entrée de la transmission et le régime de marche à vide du groupe motopropulseur et en fonction d'un couple de la chaîne cinématique ou d'une quantité de carburant acheminée au groupe motopropulseur (1), **caractérisé en ce que** lorsque la quantité de carburant acheminée au groupe motopropulseur (1) est inférieure à une valeur limite ou qu'un couple est transmis du véhicule automobile au groupe motopropulseur (1), l'ouverture croissante de l'embrayage (6) est supprimée ou la position de l'embrayage est corrigée dans le sens d'une fermeture croissante, ou, lorsque la quantité de carburant acheminée au groupe motopropulseur (1) est supérieure à une valeur limite ou qu'un couple est transmis du groupe motopropulseur au véhicule automobile, la fermeture croissante de l'embrayage (6) est supprimée ou la position de l'embrayage est corrigée dans le sens d'une ouverture croissante.
